(19) Europäisches Patentamt
European Patent Office
Office européen des brevets

(11) Veröffentlichungsnummer: **0 001 049**
**B1**

# (12) EUROPÄISCHE PATENTSCHRIFT

(45) Veröffentlichungstag der Patentschrift: **13.05.81**

(51) Int. Cl.³: **C 09 D 7/12**, C 09 D 3/66, C 08 L 67/00

(21) Anmeldenummer: **78100605.1**

(22) Anmeldetag: **07.08.78**

## (54) Verfahren zur Herstellung von lagerstabilen und vergilbungsfrei einbrennbaren Lackharzen.

(30) Priorität: **23.08.77 DE 2737984**

(43) Veröffentlichungstag der Anmeldung: **21.03.79 Patentblatt 79/6**

(45) Bekanntmachung des Hinweises auf die Patenterteilung: **13.05.81 Patentblatt 81/19**

(84) Benannte Vertragsstaaten: **BE CH DE FR GB NL SE**

(56) Entgegenhaltungen:
**FR-A-2 274 616**
**GB-A-1 085 160**
**US-A-3 806 508**

(73) Patentinhaber: **Lentia Gesellschaft mit beschränkter Haftung, Schwanthalerstrasse 39 Postfach 20 16 26, D-8000 München 2 (DE)**

(72) Erfinder: **Stern, Gerhard, Dipl.Ing.,Dr., Lustenauerstrasse 17, A-4020 Linz (AT)**
Erfinder: **Dobramysl, Wilhelm, Dipl.Ing.,Dr., Kaisergasse 15, A-4020 Linz (AT)**

**EP 0 001 049 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

ACTORUM AG.

# Verfahren zur Herstellung von lagerstabilen und vergilbungsfrei einbrennbaren Lackharzen

Die Reaktionsprodukte von Amino-s-Triazinen, wie z.B. Melamin oder auch Alkyl- und Arylguanaminen mit längerkettigen Aldehyden, wie n-Butanal oder i-Butanal, wie sie z.B. nach US-PS 3,806.508 zugänglich sind, verleihen bei ihrer Verwendung als Komponente von Einbrennlacken auf Basis von Alkydharzen, diesen Harzsystemen wertvolle Eigenschaften, wie z.B. gute Lagerstabilität, hohe Reaktivität und niedrige Einbrenntemperatur. Als Nachteil musste jedoch bisher empfunden werden, dass diese Lackharze, aus Melamin- und Alkydkomponenten aufgebaut, bei Temperaturen, die zum Einbrennen erforderlich sind oder knapp darüber liegen, eine Neigung zur Verfärbung bzw. Vergilbung zeigen, so dass reinweisse oder farbtreu bleibende helle Farbtönungen mit diesen Lacken nicht erreicht werden. Erfolgreiche Massnahmen zur Vermeidung dieses Qualitätsmangels waren bisher unbekannt.

Es konnte nun überraschend gefunden werden, dass dieser unerwünschte Vergilbungseffekt vermieden werden kann, ohne dass die oben erwähnten guten Eigenschaften beeinträchtigt wurden, wenn die Tris- oder Bisalkoxyalkyl-amino-s-triazine einer thermischen Nachbehandlung unterzogen werden, bevor sie mit der Alkyd-, Acryl- oder Epoxyharzkomponente zum Lackharz weiterverarbeitet werden. Diese thermische Nachbehandlung der Triazinderivate besteht darin, dass entweder das feste, pulverisierte Produkt oder aber eine Aufschlämmung in einem geeigneten Lösungsmittel, gegebenenfalls unter Druck, erhitzt wird. Unter Umständen kann das Erhitzen des Feststoffes in einem Inertgasstrom oder Vakuum vorgenommen werden.

Gegenstand der vorliegenden Erfindung ist demnach ein Verfahren zur Herstellung von lagerstabilen, vergilbungsfrei einbrennbaren Lackharzen mit hoher Reaktivität, guter Löslichkeit in organischen Lösungsmitteln und niedriger Viskosität der Lösungen, auf Basis von Alkyd-, Acryl- oder Epoxyharz unter Zusatz von Bis- oder Trisalkoxyalkylamino-s-triazinen, das dadurch gekennzeichnet ist, dass Bis- oder Trisalkoxyalkylamino-s-triazine eingesetzt werden, die aus Triazinderivaten der allgemeinen Formel

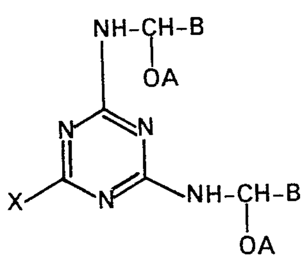

(I)

in der X eine Alkylgruppe mit 1 bis 4 C-Atomen, eine Phenylgruppe oder die Gruppe

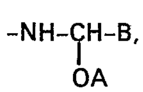

sowie A und B je einen gegebenenfalls verzweigten Alkylrest mit maximal 6 C-Atomen bedeuten, durch 3–300 Minuten dauerndes Erhitzen auf eine Temperatur von 100–200 °C unter einem Gewichtsverlust von mindestens 3% bis maximal 25%, vorzugsweise 5–15%, bezogen auf trockenes Einsatzprodukt, erhalten worden sind.

Bei dem erfindungsgemässen Erhitzungsvorgang werden merkliche Mengen flüchtiger Produkte, wie z.B. Alkohol und etwas Aldehyd abgespalten. Bezogen auf den Festkörperanteil muss der abgespaltene flüchtige Anteil bei 3–25% liegen, vorzugsweise zwischen 5–15 Gew.%. Die Abspaltung einer gewissen Mindestmenge an Flüchtigem ist für den Erfolg wesentlich, die Überschreitung der Obergrenze dagegen kann sich wieder nachteilig auf das Vergilbungsverhalten auswirken. Die optimalen Bedingungen für die erfindungsgemässe thermische Nachbehandlung sind von der Art der Alkyl- und Alkoxysubstituenten am Amino-s-Triazin der Formel I abhängig und können in orientierenden Versuchen leicht ermittelt werden.

Die Aminotriazinderivate der Formel I, die auf bekannte Weise hergestellt werden (siehe US-PS 3,806.508), können vor der thermischen Behandlung durch Kristallisation oder Eindampfen des Reaktionsgemisches als Feststoffe isoliert werden. Die thermische Nachbehandlung kann aber auch ohne Isolierung der Produkte in den Herstellungsprozess integriert werden. So kann beispielsweise das Festprodukt in einem Lösungsmittel, vorzugsweise in einem üblichen Lacklösungsmittel, wie z.B. $C_1$–$C_4$-Alkanole, $C_3$–$C_6$-Alkanolacetate, alkylierte Benzole, erhitzt werden. Siedet das verwendete Lösungsmittel unterhalb der erwünschten Behandlungstemperatur, so wird die Behandlung bei erhöhtem Druck durchgeführt. Beispielsweise kann ein Druck von 1–10 bar Anwendung finden. Es kann aber auch nach dem Reaktionsende das Lösungsmittel zugefügt, die überschüssigen flüchtigen Anteile des Reaktionsgemisches, sowie des entstandenen Wassers abdestilliert und sodann durch Temperaturerhöhung, gegebenenfalls unter Druck, nachbehandelt werden. Es ist fernerhin möglich, die Festprodukte unter oder über ihrem Schmelzpunkt, jedoch innerhalb des erfindungsgemässen Temperaturbereiches, unter Umständen unter Anwendung von Inertgas oder Vakuum, thermisch nachzubehandeln.

Die erfindungsgemäss gewonnenen Produkte ergeben zusammen mit Filmbildnern wie etwa Alkyd-, Acryl- oder Epoxyharzen vergilbungsfreie, lagerstabile, hochreaktive und bei niedriger Temperatur einbrennbare, qualitativ hochwertige Lacke, die wahlweise entweder gelöst in üblichen Lacklösungsmitteln, oder aber in lösungsmittelfreien Lacksystemen z.B. als Pulvereinbrennlacke verwendet werden können. Die mit den erfindungsgemässen Triazinderivaten als Lackkomponente mit einem Alkyd-, Acryl- oder Epoxyharz

zugänglichen Lacksysteme zeichnen sich z.B. gegenüber bisher üblichen Alkoxymelaminformaldehydharzen durch bessere Lagerstabilität, niedrigere Viskosität der Lösungen gleichen Feststoffgehaltes und bessere Lackeigenschaften aus. Die für die erfindungsgemässe Nachbehandlung eingesetzten Tris- bzw. Bisalkoxyalkyl-amino-s-triazine der Formel I, die gemäss US-PS 3,806.508 hergestellt worden sind, wurden im einzelnen unter den angeführten Reaktionsbedingungen erhalten:

N,N′,N″-Tris(methoxy-i-butyl)-melamin aus 1 Mol Melamin, 12,5 Mol Isobutyraldehyd, 22,5 Mol Methanol und 3,0 g p-Toluolsulfosäure als Katalysator und zweistündigem Kochen unter Rückfluss.

N,N′,N″-Tris-(i-butoxy-i-butyl)-melamin aus 1 Mol Melamin, 12,5 Mol Isobutyraldehyd, 20 Mol Isobutanol und 3,0 g p-Toluolsulfosäure unter zweistündigem Kochen unter Rückfluss.

N,N′,N″-Tris-(n-butoxy-i-butyl)-melamin aus 1 Mol Melamin, 12,5 Mol Isobutyraldehyd, 22,5 Mol n-Butanol mit 3,0 g p-Toluolsulfosäure als Katalysator unter 3stündigem Kochen unter Rückfluss.

N,N′,N″-Tris-(methoxy-n-butyl)-melamin aus 1 Mol Melamin, 8 Mol n-Butyraldehyd, 20 Mol Methanol und 3,0 g p-Toluolsulfosäure als Katalysator unter 2stündigem Kochen unter Rückfluss.

N,N′,N″-Tris-(i-butoxy-n-butyl)-melamin aus 1 Mol Melamin, 12,5 Mol n-Butyraldehyd, 20 Mol i-Butanol, 3,0 g p-Toluolsulfosäure als Katalysator unter 2stündigem Kochen unter Rückfluss.

N,N′,N″-Tris-(isobutoxy-n-propyl)-melamin aus 1 Mol Melamin, 9 Mol n-Propionaldehyd, 18 Mol i-Butanol und 3,0 g p-Toluolsulfosäure als Katalysator unter 2stündigem Kochen unter Rückfluss.

N,N′,N″-Tris-(n-butoxy-n-butyl)-melamin aus 1 Mol Melamin, 12,5 Mol n-Butyraldehyd, 20 Mol n-Butanol und 3,0 g p-Toluolsulfosäure als Katalysator unter 2stündigem Kochen unter Rückfluss.

N,N′,N″-Tris-(methoxy-n-propyl)-melamin aus 1 Mol Melamin, 6 Mol n-Propionaldehyd, 18 Mol Methanol, 2,5 g p-Toluolsulfosäure als Katalysator unter zweistündigem Kochen bei 65°C unter Rückfluss.

N,N′,N″-Tris-(i-butoxy-äthyl)-melamin aus 1 Mol Melamin, 9 Mol Acetaldehyd, 18 Mol i-Butanol und 3,0 g p-Toluolsulfosäure als Katalysator unter 4stündigem Kochen bei 51-62°C.

N,N′-Bis-(methoxy-i-butyl)-benzoguanamin aus 1 Mol Benzoguanamin, 4 Mol i-Butyraldehyd, 18 Mol Methanol und 2,5 g p-Toluolsulfosäure als Katalysator unter einstündigem Kochen bei 65°C.

N,N′-Bis-(methoxy-i-butyl)-acetoguanamin aus 1 Mol Acetoguanamin, 8 Mol i-Butyraldehyd, 18 Mol Methanol und 2,5 g p-Toluolsulfosäure als Katalysator un r 2stündigem Kochen bei 64°C.

Die nachfolgenden Beispiele sollen das erfindungsgemässe Verfahren näher erläutern.

Beispiel 1:

Thermische Nachbehandlung im festen Zustand

N,N′,N″-Tris-(methoxy-i-butyl)-melamin wird nach Trocknung bei 50°C im Vakuum bei einer Temperatur von 140°C und einem Druck von 1 bar insgesamt 125 Minuten lang der thermischen Nachbehandlung unterzogen. Nach 45 Minuten werden 3,6%, nach 80 Min. 4,5% und schliesslich nach 125 Min. 6,2% Gewichtsverlust, bezogen auf eingesetztes Rohprodukt, festgestellt. Bei jeder dieser Zeitstufen wurden Proben entnommen und zur Herstellung von Lackharzen verwendet.

Eine 50%ige n-butanolische Lösung dieser drei Substanzen wird mit einem handelsüblichen, 30% Ricinusöl enthaltenden Alkydharz mit einer Säurezahl 20–30 so vermischt, dass das Feststoffverhältnis 30 Gew.-Teile Triazinderivat : 70 Gew.-Teile Alkydharz beträgt. Ein Gramm dieses Lackes wird auf einer weissen glasierten Platte von 20 $cm^2$ aufgetragen und 30 Min. bei 125°C eingebrannt. Als Blindwert wird eine Probe unter Verwendung eines handelsüblichen, hochreaktiven Melaminformaldehydharzes (55 Gew.% Lösung in Butanol) hergestellt (Vergleich 1). Der Farbunterschied zwischen dem Vergleich 1 und der Probe erfolgte visuell, wobei gleiches Aussehen der Probe wie der Vergleich 1 mit der Note 1 gewertet wird und falls die Probe besser ist mit Note 0. Der aus thermisch nicht nachbehandeltem Triazinderivat hergestellte stark vergilbende Vergleich 2 wurde dagegen mit Note 5 bewertet.

Mit den beiden obigen Erhitzungszeiten erhaltenen 3 Proben wird folgende Bewertung ermittelt:

Tabelle 1

| Nr. | % Gewichtsabnahme | Dauer der Erhitzung auf 140°C | Note |
|---|---|---|---|
| 1 | 3,6 | 45 min. | 2 |
| 2 | 4,5 | 80 min. | 1 |
| 3 | 6,2 | 125 min. | 0 |

Beispiel 2:

Thermische Nachbehandlung im geschmolzenen Zustand

Die in nachfolgender Tabelle 2 angeführten Substanzen werden wie vorhergehend angegeben hergestellt und nach Kristallisation und Trocknung bei 50°C im Vakuum in fester Form gewonnen. Ferner wird in einigen Fällen der Feststoff direkt durch Eindampfen der Reaktionslösung hergestellt. Ein Teil dieser Pulver wird jeweils 10 Minuten auf ca. 160°C erhitzt, wobei klare Schmelzen erhalten werden. Die so hergestellten Proben werden in n-Butanol gelöst, so dass 60%ige Lösungen entstehen. Aus diesen werden wie in Beispiel 1 Lackharze hergestellt und getestet; jedoch wurden sie 60 Minuten bei 100°C eingebrannt. Die Ergebnisse der wie in Beispiel 1 durchgeführten Bewertung sind in der folgenden Tabelle 2 zusammengefasst.

Tabelle 2

| Ausgangsverbindung für die Nachbehandlung | Bewertung kristallisiert | eingedampft |
|---|---|---|
| N,N',N"-Tris-(methoxy--i-butyl)-melamin | 0 | 1 |
| N,N',N"-Tris-(i-butoxy-i-butyl)-melamin | 1 | 2 |
| N,N',N"-Tris-(n-butoxy-i-butyl)-melamin | – | 2 |
| N,N',N"-Tris-(methoxy-n-butyl)-melamin | 1 | – |
| N,N',N"-Tris-(i-butoxy-n-butyl)-melamin | 1 | – |
| N,N',N"-Tris-(n-butoxy-n-butyl)-melamin | 1 | 1 |
| N,N',N"-Tris-(isobutoxy-n-propyl)-melamin | 1 | – |
| N,N',N"-Tris-(methoxy-n-propyl)-melamin | 1 | – |
| N,N',N"-Tris-(i-butoxy-äthyl)-melamin | 1 | – |
| N,N'-Bis-(methoxy-i-butyl)-benzoguanamin | 2 | – |
| N,N'-Bis-(methoxy-i-butyl)-acetoguanamin | 0 | – |

Beispiel 3

Festes, trockenes N,N',N"-Tris-(methoxy-isobutyl)-melamin wird in ein auf 180 °C vorgewärmtes Gefäss eingebracht, wobei sofort der Schmelzvorgang eintrat. Dann wird 3, 4 und 5 Minuten bei dieser Temperatur belassen, wobei 4,7, 7,5 und 9% Gewichtsverlust, bezogen auf das Einsatzproduktgewicht, ermittelt werden. Die jeweils nach den obigen Zeitstufen gezogenen Proben werden nach dem Vergleichstest, wie in Beispiel 1 beschrieben, mit den Noten 1, 1 und 0 bewertet.

Beispiel 4

Thermische Nachbehandlung in gelöstem Zustand

Ein gemäss den vorne angegebenen Bedingungen hergestellter Reaktionsansatz von N,N',N"-Tris-(methoxy-i-butyl)-melamin wird zur Hälfte eingedampft, 250 g n-Butanol werden zugefügt und dann wird restlicher Isobutyraldehyd, Methanol und Reaktionswasser sowie soviel Butanol abdestilliert, dass die gewünschte Konzentration (vorzugsweise 50–80%) erreicht wird. Nunmehr wird die Temperatur auf 150 °C gesteigert und 3 Stunden gehalten. Der Druck im Reaktionsgefäss steigt auf 6–7 bar, der Gewichtsverlust bezogen auf Trockensubstanz beträgt 7%, dann wird abgekühlt. Man erhält eine klare, relativ niedrig-viskose Lösung. Beispielsweise beträgt die Auslaufzeit einer so erhaltenen 70% Lösung bestimmt mit dem DIN-Becher 4 nach DIN 53211 48 Sekunden.

Diese Lösung wurde nach den Angaben gemäss Beispiel 2 getestet und ergab die Note 0.

Beispiel 5

Aus einem Ansatz zur Herstellung von N,N',N"-Tris-(methoxy-n-butyl)-melamin wurde durch Kristallisation, Filtration und Trocknung bei 50 °C im Vakuum festes N,N',N"-Tris-(methoxy-n-butyl)-melamin gewonnen. Dann werden 40 g zusammen mit 60 g n-Butanol zwei Stunden am Rückfluss erhitzt, wobei eine klare farblose Lösung entsteht. Der Vergilbungstest nach Beispiel 1 ergibt die Note 1.

Beispiel 6

Analog zu Beispiel 5 wird festes N,N',N"-Tris-(i-butoxy-i-butyl)-melamin gewonnen. 40 g davon werden mit 60 g Xylol 30 Minuten unter Rückfluss erhitzt, wobei eine klare farblose Lösung entsteht. Der Vergilbungstest nach Beispiel 1 ergibt die Note 0.

Beispiel 7

Ein handelsübliches, fremdvernetzendes Acrylharz (Säurezahl 8–12), in 50 Gew.% Lösung in Butanol-Xylol vorliegend, wird mit dem thermisch nachbehandelten N,N',N"-Tris-(methoxy-i-butyl)-melamin nach Beispiel 4 im Verhältnis 8:2 gemischt und die damit hergestellte Testlackfläche bei 125 °C 30 Minuten lang eingebrannt.

Man erhält farblose Beschichtungen mit hohem Glanz mit der Vergilbungsnote 0.

Beispiel 8

Ein handelsübliches, niedrigmolekulares Epoxyharz, als 50 Gew.% Lösung in Butanol-Xylol vorliegend, wird mit dem thermisch nachbehandelten N,N',N"-Tris-(methoxy-i-butyl)-melamin nach Beispiel 4 im Verhältnis 8:2 gemischt und die damit hergestellte Testlackfläche bei 100 °C 60 Minuten lang eingebrannt. Es wurden sehr harte, doch elastische Überzüge erhalten.

Beispiel 9

Herstellung eines Einbrennlackes

Folgende Komponenten werden verwendet:

1. Erfindungsgemäss behandeltes N,N',N"-Tris-(methoxy-i-butyl)-melamin in Form einer n-butanolischen Lösung hergestellt nach Beispiel 4

| | |
|---|---|
| Trockenrückstand (1 Stunde, 90 °C, 1 g/100 $cm^2$) | 55% |
| Einbrennrückstand (1 Stunde, 125 °C, 1:1 mit n-Butanol, davon 4 g/100 $cm^2$) | 50% |
| Farbzahl (DIN 53403) | $<1$ |
| Säurezahl | $<2$ |
| Auslaufzeit mit DIN Becher 4 nach DIN 53211 | 21 sec. |

2. Als Alkydharz wird ein handelsübliches, 30% Rizinusöl enthaltendes Alkydharz (Säurezahl 20–30) verwendet, das vom Hersteller für Einbrennlacke ab 80 °C Einbrenntemperatur empfohlen wird und als 60 Gew.% Lösung in Butanol-Xylol eingesetzt wird.

3. Als Weisspigment wird ein Titandioxyd-Pigment (Rutil) verwendet.

8 Gew.-Teile des als Komponente 1 charakterisierten behandelten N,N',N''-Tris-(methoxy-i-butyl)-melamin werden mit 32 Gew.-Teilen des Alkydharzes und 25 Gew.-Teilen des Titandioxydpigmentes in einer 60 Gew.% Lösung in Butanol-Xylol verarbeitet. Dann wird der Lack auf ein Stahlblech von 0,8 mm Stärke aufgetragen und bei 120°C 15 Minuten eingebrannt. Die Trockenfilmstärke beträgt 40 µm.

Der auf diese Weise erhaltene Lackfilm zeigt eine Pendelhärte nach DIN 53157 von 102 sec, eine Tiefung gemäss DIN 53136 von 8 mm, einen Glanz gemäss ASTM-D 523-72 von 94 und eine gute Aromatenfestigkeit (Xylol). Es ist keinerlei Vergilbung festzustellen.

**Patentansprüche**

1. Verfahren zur Herstellung von lagerstabilen, vergilbungsfrei einbrennbaren Lackharzen mit hoher Reaktivität, guter Löslichkeit in organischen Lösungsmitteln und niedriger Viskosität der Lösungen, auf Basis von Alkyd-, Acryl- oder Epoxyharz unter Zusatz von Bis- oder Trisalkoxyalkylamino-s-triazinen, dadurch gekennzeichnet, dass Bis- oder Trisalkoxyalkylamino-s-triazine eingesetzt werden, die aus Triazinderivaten der allgemeinen Formel

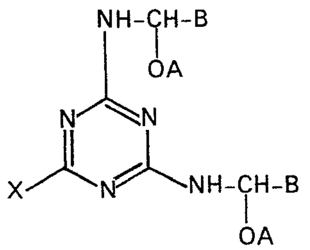

(I)

in der
X eine Alkylgruppe mit 1-4 C-Atomen, eine Phenylgruppe oder die Gruppe

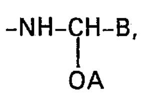

sowie
A und B je einen gegebenenfalls verzweigten Alkylrest mit maximal 6 C-Atomen bedeuten,
durch 3-300 Minuten dauerndes Erhitzen auf eine Temperatur von 100-200°C unter einem Gewichtsverlust von mindestens 3% bis maximal 25°, bezogen auf trockenes Einsatzprodukt, erhalten worden sind.

2. Verfahren nach Anspruch 1, dadurch gekennzeichnet, dass ein bis zu einem Gewichtsverlust von 5 bis 15% erhitztes Produkt eingesetzt wird.

3. Verfahren nach den Ansprüchen 1 und 2, dadurch gekennzeichnet, dass die Erwärmung der Triazinderivate der Formel I in einem Lösungsmittel vorgenommen wird.

4. Verfahren nach Anspruch 3, dadurch gekennzeichnet, dass ein Lösungsmittel verwendet wird, dessen Siedepunkt unter der Behandlungstemperatur liegt und die Behandlung unter erhöhtem Druck vorgenommen wird.

5. Verfahren nach den Ansprüchen 3 und 4, dadurch gekennzeichnet, dass der thermischen Behandlung die rohe Reaktionslösung unterworfen wird, die bei der Herstellung des Triazinderivates der Formel I ohne Isolierung desselben erhalten wird.

6. Verfahren nach den Ansprüchen 1 und 2, dadurch gekennzeichnet, dass die Erwärmung der Triazinderivate der Formel I bei der Temperatur von 100-200°C in festem oder geschmolzenem Zustand vorgenommen wird.

7. Verfahren nach Anspruch 6, dadurch gekennzeichnet, dass die Behandlung in Inertgasatmosphäre oder Vakuum durchgeführt wird.

**Patent Claims**

1. A process for the manufacture of storage-stable lacquer resins which can be baked without yellowing and which have a high reactivity, a good solubility in organic solvents and a low viscosity in solution and are based on an alkyd resin, acrylic resin or epoxy resin with the addition of bis- or tris-alkoxyalkylamino-s-triazines, which comprises the use of bis- or tris-alkoxyalkylamino-s-triazines which have been obtained from triazine derivatives of the general formula

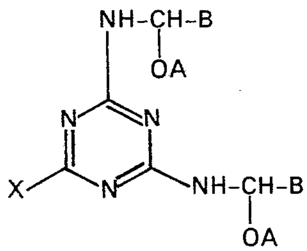

(I)

wherein X is an alkyl group having 1-4 C atoms, a phenyl group or the group

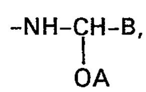

and A and B each are an unbranched or branched alkyl radical having a maximum of 6 C atoms, by heating for a period of 3-300 minutes at a temperature of 100-200°C, up to a weight loss of at least 3% up to a maximum of 25%, relative to dry starting product.

2. A process as claimed in claim 1, which comprises the use of a product which has been heated up to a weight loss of 5 to 15%.

3. A process as claimed in claims 1 and 2, which comprises heating the triazine derivatives of the formula I in a solvent.

4. A process as claimed in claim 3, which comprises the use of a solvent, the boiling point of which is below the treatment temperature, the treatment being carried out under elevated pressure.

5. A process as claimed in claims 3 and 4, which

comprises subjecting the crude reaction solution, which is obtained in the preparation of the triazine derivative of the formula I, without isolation of the latter, to the thermal treatment.

6. A process as claimed in claims 1 and 2, which comprises heating the triazine derivatives of the formula I at a temperature of 100-200 °C in the solid or molten state.

7. A process as claimed in claim 6, which comprises effecting the treatment in an inert gas atmosphere or in vacuo.

**Revendications**

1. Procédé pour la production de résines-laques pouvant être soumises à une cuisson au four, ne jaunissant pas et stables au magasinage, présentant une forte réactivité, une bonne solubilité dans les solvants organiques et une faible viscosité en solutions, à base de résine alkyde, acrylique ou époxy par addition de bis- ou trisalcoxyalcoylamino-s-triazines, caractérisé en ce qu'on utilise des bis- ou trisalcoxyalcoylamino-s-triazines qui ont été obtenues à partir de dérivés de la triazine de formule générale:

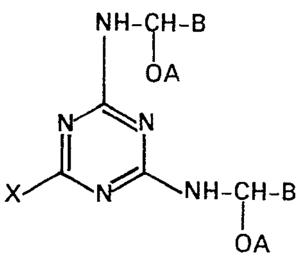

(I)

dans laquelle X est un groupe alcoyle renfermant de 1 à 4 atomes de C, un groupe phényle ou le groupe

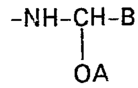

dans lequel A et B désignent chacun un radical alcoyle éventuellement ramifié renfermant au maximum 6 atomes de C, par chauffage continu pendant un laps de temps de 3 à 300 minutes à une température de 100 à 200 °C avec une perte de poids d'au moins 3% et au maximum de 25% sur la base du produit de départ mesuré à sec.

2. Procédé suivant la revendication 1, caractérisé en ce qu'on utilise un produit chauffé jusqu'à une perte de poids de 5 à 15%.

3. Procédé suivant les revendications 1 et 2, caractérisé en ce qu'on effectue le chauffage des dérivés de triazine de formule (I) dans un solvant.

4. Procédé suivant la revendication 3, caractérisé en ce qu'on utilise un solvant dont le point d'ébullition est inférieur à la température de traitement, et on effectue le traitement sous pression élevée.

5. Procédé suivant les revendications 3 et 4, caractérisé en ce qu'on soumet au traitement thermique la solution réactionnelle brute qui est obtenue lors de la préparation du dérivé de triazine de formule (I) sans isolement de ce dérivé.

6. Procédé suivant les revendications 1 et 2, caractérisé en ce qu'on chauffe les dérivés de triazine de formule (I) à la température de 100 à 200 °C à l'état solide ou fondu.

7. Procédé suivant la revendication 6, caractérisé en ce qu'on effectue le traitement dans une atmosphère inerte ou sous vide.